# DEMANDE DE BREVET EUROPEEN

(11) **EP 4 241 977 A1**
(43) Date de publication de la demande: **13.09.2023**
(21) Numéro de dépôt: 23160808.4
(22) Date de dépôt: 08.03.2023
(51) Int. Cl.: B32B 1/08, B32B 7/12, B32B 27/08, B32B 27/18, B32B 27/22, B32B 27/32, B32B 27/34

(54) **STRUCTURE TUBULAIRE MULTICOUCHE IGNIFUGÉE POUR LE REFROIDISSEMENT DE BATTERIES DE VÉHICULE ÉLECTRIQUE OU DE SYSTÈME DE STOCKAGE STATIONNAIRE DE L'ÉNERGIE**

(30) Priorité: 10.03.2022 FR 2202084
(71) Demandeur: ARKEMA FRANCE, 92700 Colombes (FR)
(72) Inventeur: MARCOURT, Marjorie, 27470 SERQUIGNY (FR); ABGRALL, Florent, 27470 SERQUIGNY (FR); GOUPIL, Antoine, 150874 SEOUL (KR)
(74) Mandataire: Arkema Patent

(57) **Abrégé**

La présente invention concerne une structure tubulaire multicouche ignifugée pour le refroidissement de batterie de véhicule électrique ou de batterie système de stockage stationnaire de l'énergie, comprenant au moins deux couches :
une couche interne (I) comprenant au moins 40% d'au moins un polymère thermoplastique P1 choisi parmi une polyoléfine et un élastomère thermoplastique et jusqu'à 5% en poids d'un composé choisi parmi un stabilisant thermique et un désactivateur métallique ou un mélange de ceux-ci,
une couche externe (II) comprenant une composition à base d'au moins un polyamide majoritaire,
ladite composition comprenant en poids :
a) au moins 50% d'au moins un polyamide,
b) de 15 à 38% d'au moins un ignifugeant,
c) de 4 à 20%, en particulier 4 à 15% d'une polyoléfine,
d) de 0 à 10%, en particulier de 0,1 à 10% en poids d'au moins un plastifiant,
e) de 0 à 5%, en particulier de 0,1 à 5% d'au moins un additif,

la somme a) + b) +c) + d) + e) étant égale à 100%.

## Description

La présente invention concerne une structure tubulaire multicouche ignifugée pour le refroidissement de batteries de véhicule électrique ou de système de stockage stationnaire de l'énergie.

L'un des buts recherchés, notamment dans le domaine automobile est de proposer des véhicules de moins en moins polluants. Ainsi, les véhicules électriques ou hybrides comportant une batterie visent à remplacer progressivement les véhicules thermiques, tels que les véhicules à essence ou bien à gasoil.

Or, il s'avère que la batterie est un constituant du véhicule relativement complexe. Selon l'emplacement de la batterie dans le véhicule, il peut être nécessaire de la protéger des chocs et de l'environnement extérieur, qui peut être à des températures extrêmes et à une humidité variable. Il est également nécessaire d'éviter tout risque de flammes.

De plus, il est important que sa température de fonctionnement n'excède pas 55°C pour ne pas détériorer les cellules de la batterie et préserver sa durée de vie. A l'inverse, par exemple en hiver, il peut être nécessaire d'élever la température de la batterie de manière à optimiser son fonctionnement.

Un autre but recherché, notamment dans les systèmes de stockage stationnaire de l'énergie est de disposer de systèmes permettant de lisser la production des énergies renouvelables, de faire fonctionner des véhicules électriques ou tout simplement renforcer les réseaux électriques.

Ainsi, le stockage stationnaire devient stratégique car il participe à assurer l'équilibre entre la production et la consommation de l'électricité. L'énergie est stockée en période creuse ou de forte production, et est ensuite restituée plus tard en cas de demande élevée ou de production plus faible. Le véhicule automobile électrique ou hybride ou les systèmes de stockage stationnaire de l'énergie nécessitent ainsi un dispositif de refroidissement de la batterie ou du système qui consiste en général en des lignes tubulaires multicouches.

Afin de protéger l'intégrité du véhicule ou du système, les lignes doivent assurer une résistance au feu. Ces lignes se divisent en deux catégories, notamment pour les véhicules électriques : les lignes à l'intérieur du pack batterie et les lignes à l'extérieur du pack batterie. Le cahier des charges pour les lignes à l'extérieur du pack batterie est plus sévère et requiert en plus une résistance au Chlorure de Zinc (environnement sous capot) et une résistance au choc à froid.

Ces lignes de refroidissement de batterie ou de système de stockage stationnaire de l'énergie transportent généralement un fluide de refroidissement et les polyamides à longues chaines sont bien adaptés pour lesdites lignes. Ils présentent une bonne durée de vie au contact du fluide de refroidissement (90-110°C) tout en assurant :
- une souplesse des structures qui facilite le montage sur les véhicules
- une résistance des structures dans un environnement sous capot sévère.

Il est également possible de conférer aux polyamides une résistance au feu par l'ajout de charges ignifuges qui utilise la voie par compoundage. Cependant, cette technique d'ignifugation ne permet plus d'assurer les principales propriétés requises pour l'application de refroidissement de batterie ou de système de stockage stationnaire de l'énergie car un tel polyamide est fragile et la ligne tubulaire ainsi constituée aurait donc une résistance au choc insuffisante.

Ce but est atteint par le développement de solutions multicouches qui permet ainsi de combiner l'ensemble des propriétés mentionnées précédemment et de répondre au cahier des charges complexe de l'application.

Ainsi, la présente invention concerne une structure tubulaire multicouche ignifugée pour le refroidissement de batterie de véhicule électrique ou de batterie de système de stockage stationnaire de l'énergie, comprenant au moins deux couches :
une couche interne (I) comprenant, par rapport au poids total de la couche (I), au moins 40% en poids d'au moins un polymère thermoplastique P1 choisi parmi une polyoléfine, un élastomère thermoplastique et un mélange de ceux-ci, et jusqu'à 5% en poids d'un composé choisi parmi un stabilisant thermique et un désactivateur métallique ou un mélange de ceux-ci,
une couche externe (II) comprenant une composition à base d'au moins un polyamide majoritaire, ladite composition comprenant en poids, par rapport au poids total de la couche (II) :
   a) au moins 50% d'au moins un polyamide,
   b) de 15 à 38% d'au moins un ignifugeant,
   c) de 4 à 20%, en particulier 4 à 15% d'une polyoléfine,
   d) de 0 à 10%, en particulier de 0,1 à 10% en poids d'au moins un plastifiant,
   e) de 0 à 5%, en particulier de 0,1 à 5% d'au moins un additif,
la somme a) + b) +c) + d) + e) étant égale à 100%.

La présente invention concerne ainsi une structure tubulaire multicouche ignifugée pour le refroidissement de batterie de véhicule électrique ou de batterie de système de stockage stationnaire de l'énergie, comprenant au moins deux couches :
une couche interne (I) comprenant, par rapport au poids total de la couche (I), au moins 40% en poids d'au moins un polymère thermoplastique P1 choisi parmi une polyoléfine, un élastomère thermoplastique et un mélange de ceux-ci,
une couche externe (II) comprenant une composition à base d'au moins un polyamide majoritaire, ladite composition comprenant en poids, par rapport au poids total de la couche (II) :
   a) au moins 50% d'au moins un polyamide,
   b) de 15 à 38% d'au moins un ignifugeant,
   c) de 4 à 20%, en particulier 4 à 15% d'une polyoléfine,
   d) de 0 à 10%, en particulier de 0,1 à 10% en poids d'au moins un plastifiant,
   e) de 0 à 5%, en particulier de 0,1 à 5% d'au moins un additif,
la somme a) + b) +c) + d) + e) étant égale à 100%.

Selon un mode de réalisation, la présente invention concerne une structure tubulaire multicouche ignifugée pour le refroidissement de batterie de véhicule électrique ou de batterie de système de stockage stationnaire de l'énergie, comprenant au moins deux couches :
une couche interne (I) comprenant, par rapport au poids total de la couche (I) au moins 20% en poids d'une polyoléfine, éventuellement de 0 à 80% en poids d'un élastomère, et éventuellement de 0 à 5% en poids d'un stabilisant thermique,
une couche externe (II) comprenant une composition à base d'au moins un polyamide majoritaire, ladite composition comprenant en poids, par rapport au poids total de la couche (II) :
   a) au moins 50% en poids d'au moins un polyamide,
   b) de 15 à 38% en poids d'au moins un ignifugeant,
   c) de 4 à 20% en poids, en particulier 4 à 15% en poids d'une polyoléfine,
   d) de 0 à 10% en poids, en particulier de 0,1 à 10% en poids d'au moins un plastifiant,
   e) de 0 à 5% en poids, en particulier de 0,1 à 5% en poids d'au moins un additif,
la somme a) + b) +c) + d) + e) étant égale à 100%.Les Inventeurs ont donc trouvé de manière inattendue qu'une structure multicouche comprenant au moins deux couches dont la couche interne est constituée de polyoléfine optionnellement stabilisée et la couche externe est à base de polyamide comprenant un ignifugeant permettait la constitution d'une structure combinant la résistance au feu et une bonne durée de vie en contact prolongé avec un fluide de refroidissement, la souplesse, la résistance au chlorure de zinc et une bonne tenue à l'éclatement, caractéristiques essentielles à l'application de refroidissement de batteries de véhicule électrique ou de système de stockage stationnaire de l'énergie.

Dans un mode de réalisation, ladite couche interne (I) comprend, par rapport au poids total de ladite couche (I), au moins 40% en poids, notamment au moins 50% en poids, en particulier au moins 60% en poids d'au moins un polymère thermoplastique P1 choisi parmi une polyoléfine, un élastomère thermoplastique et un mélange de ceux-ci, et jusqu'à 5% en poids d'un composé choisi parmi un stabilisant thermique et un désactivateur métallique ou un mélange de ceux-ci.

Dans un mode de réalisation, ladite couche interne (I) comprend, par rapport au poids total de ladite couche (I), au moins 40% en poids, notamment au moins 50% en poids, en particulier au moins 60% en poids d'au moins une polyoléfine.

Dans un mode de réalisation, ladite couche interne (I) comprend, par rapport au poids total de ladite couche (I), jusqu'à 5% en poids d'un stabilisant thermique, c'est-à-dire de 0 (inclus) à 5% en poids (inclus) d'un stabilisant thermique.

Par l'expression « structure tubulaire multicouche » il faut entendre une structure de tube ou tuyau de forme cylindrique et de section circulaire.

Par le terme « batterie », il faut entendre batterie » un ensemble d'accumulateurs électriques également dénommé « pack batterie ».

Par le terme « véhicule », il faut entendre une voiture, un camion, un train ou un avion, en particulier une voiture.

Par l'expression « système de stockage stationnaire de l'énergie », il faut entendre par exemple le stockage de l'électricité produite par les énergies renouvelables, l'amélioration de la stabilité des réseaux d'électricité ou encore l'accompagnement de l'autoconsommation électrique chez les particuliers ou dans les entreprises, et ce au moyen d'un stockage mécanique, par exemple une station de pompage, un stockage par air comprimé ou inertie, d'un stockage chimique, ou d'un stockage électrochimique.

Le terme « ignifugé » signifie que la structure tubulaire est résistante au feu avec un résultat V0 sur le test UL94 à 0,8 mm (IEC 60695-11-10).

Le test UL94, généralement appliqué sur un barreau d'un seul produit, est effectué ici sur une structure monocouche (tube monocouche) ou multi-couche, en particulier un tube tricouche avec la flamme qui est mise en contact uniquement avec la couche externe du tube, ledit tube tricouche présentant les dimensions de couche suivantes : de la couche externe vers la couche interne : 0.15mm // 0.10mm // 0.75mm ou 0.350mm // 0.10mm // 0.55mm.

### S'agissant du polyamide

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

Selon la présente demande, le terme "polyamide", également noté PA, vise :
- les homopolymères,
- les copolymères, ou copolyamides, à base de différents motifs amide, tel par exemple le copolyamide 6/12 avec des motifs amide dérivés du lactame-6 et du lactame-12,
- les alliages de polyamides, dès lors que le polyamide est le constituant majoritaire.

Il existe aussi une catégorie de copolyamides au sens large, qui bien que non préférée, fait partie du cadre de l'invention. Il s'agit des copolyamides comprenant non seulement des motifs amides (qui seront majoritaires, d'où le fait qu'ils soient à considérer comme des copolyamides au sens large), mais aussi des motifs de nature non amide, par exemple des motifs éthers. Les exemples les plus connus sont les PEBA ou polyéther-bloc-amide, et leurs variantes copolyamide-ester-éther, copolyamide-éther, copolyamide ester. Parmi ceux-ci, citons le PEBA-12 où les motifs polyamide sont les mêmes que ceux du PA12, le PEBA-6.12 où les motifs polyamide sont les mêmes que ceux du PA6.12.

Ledit polyamide peut être un polyamide amorphe ou semi-cristallin.

Un polyamide amorphe au sens de l'invention désigne un polyamide qui ne présente qu'une température de transition vitreuse (pas de température de fusion (Tf)), ou un polyamide très peu cristallin ayant une température de transition vitreuse et un point de fusion tel que l'enthalpie de cristallisation lors de l'étape de refroidissement à une vitesse de 20K/min mesurée selon la norme ISO 11357-3 :2013 est inférieure à 30 J/g, notamment inférieure à 20 J/g, de préférence inférieure à 15 J/g. Un polyamide semi-cristallin, au sens de l'invention, désigne un polyamide qui présente une température de transition vitreuse déterminée par analyse mécanique dynamique (DMA) selon la norme ISO 6721-11 :2019 et une température de fusion (Tf) déterminée selon la norme ISO 11357-3 :2013, et une enthalpie de cristallisation lors de l'étape de refroidissement à une vitesse de 20K/min en DSC mesurée selon la norme ISO 11357-3 de 2013 supérieure à 30 J/g, de préférence supérieure à 35 J/g.

Dans une première variante, ledit polyamide peut être obtenu à partir de la polycondensation d'au moins un acide aminocarboxylique comprenant de 6 à 18 atomes de carbone, préférentiellement de 9 à 18 atomes de carbone, plus préférentiellement de 10 à 18 atomes de carbone, encore plus préférentiellement de 10 à 12 atomes de carbone. Il peut ainsi être choisi parmi l'acide 6-aminohexanoïque, l'acide 7-aminoheptanoïque, l'acide 8-aminooctanoïque, l'acide 9-aminononanoïque, l'acide 10-aminodécanoïque, l'acide 11-aminoundécanoïque et l'acide 12-aminododécanoïque, l'acide 13-aminotridécanoïque, l'acide 14-aminotetradécanoïque, l'acide 15-aminopentadécanoïque, l'acide 16-aminohexadécanoïque, l'acide 17-aminoheptadécanoïque, l'acide 18-aminooctadécanoïque.

Préférentiellement, il est obtenu à partir de la polycondensation d'un seul acide aminocarboxylique. Dans une seconde variante, ledit polyamide peut être obtenu à partir de la polycondensation d'au moins un lactame comprenant de 6 à 18 atomes de carbone, préférentiellement de 9 à 18 atomes de carbone, plus préférentiellement de 10 à 18 atomes de carbone, encore plus préférentiellement de 10 à 12 atomes de carbone.

Préférentiellement, il est obtenu à partir de la polycondensation d'un seul lactame.

Dans une troisième variante, ledit polyamide peut être obtenu à partir de la polycondensation d'au moins une diamine X qui peut être aliphatique, cycloaliphatique ou aromatique, en particulier aliphatique, comprenant de 4 à 36 atomes de carbones, avantageusement de 6 à 18 atomes de carbone, avantageusement de 6 à 12 atomes de carbone, avantageusement de 10 à 12 atomes de carbone et d'au moins un acide dicarboxylique Y qui peut être aliphatique, cycloaliphatique ou aromatique, en particulier aliphatique comprenant de 4 à 36 atomes de carbones, avantageusement de 6 à 18 atomes de carbone, avantageusement de 6 à 12 atomes de carbone, avantageusement de 10 à 12 atomes de carbone, pour former un motif répétitif XY.

La diamine aliphatique utilisée est une diamine aliphatique qui présente une chaine principale linéaire comprenant au moins 4 atomes de carbone.

Cette chaine principale linéaire peut, le cas échéant, comporter un ou plusieurs substituant méthyle et/ou éthyle ; dans cette dernière configuration, on parle de "diamine aliphatique ramifiée". Dans le cas où la chaine principale ne comporte aucun substituant, la diamine aliphatique est dite "diamine aliphatique linéaire".

Qu'elle comporte ou non des substituant méthyle et/ou éthyle sur la chaine principale, la diamine aliphatique utilisée pour l'obtention de ce motif répétitif X.Y comprend de 4 à 36 atomes de carbones, avantageusement de 4 à 18 atomes de carbone, avantageusement de 6 à 18 atomes de carbone, avantageusement de 6 à 14 atomes de carbone.

Lorsque cette diamine est une diamine aliphatique linéaire, elle répond alors à la formule H2N-(CH2)x-NH2 et peut être choisie par exemple parmi la butanediamine, la pentanediamine, l'hexanediamine, l'heptanediamine, l'octanediamine, la nonanediamine, la décanediamine, l'undécanediamine, la dodécanediamine, la tridécanediamine, la tétradécanediamine, l'hexadécanediamine, l'octadécanedia-mine et l'octadécènediamine. Les diamines aliphatiques linéaires qui viennent d'être citées peuvent être toutes bio ressourcées au sens de la norme ASTM D6866.

Lorsque cette diamine est une diamine aliphatique ramifiée, elle peut notamment être la méthyl-2 pentanediamine, la 2-méthyl-1,8-octanediamine ou la triméthylène (2,2,4 ou 2,4,4) hexanediamine.

La diamine cycloaliphatique utilisée peut être choisie parmi le bis(3,5-dialkyl-4-aminocyclohexyl)-méthane, le bis(3,5-dialkyl-4-aminocyclohexyl)éthane, le bis(3,5-dialkyl-4-aminocyclohexyl)-propane, le bis(3,5-dialkyl-4-aminocyclo-hexyl)-butane, le bis-(3-méthyl-4-aminocyclohexyl)-méthane ou 3,3'-diméthyl-4,4'-diamino-dicyclohexyl-méthane couramment dénommé (BMACM) ou (MACM) (et noté B ci-après), le bis(p-aminocyclohexyl)-méthane couramment dénommé (PACM) (et noté P ci-après), en particulier la Dicykan^{®}, l'isopropylidènedi(cyclohexylamine) couramment dénommé (PACP), l'isophorone-diamine (notée IPD ci-après) et le 2,6-bis(amino méthyl)norbornane couramment dénommé (BAMN) et la bis(aminométhyl)cyclohexane (BAC) , en particulier la 1,3-BAC ou la , en particulier la 1,4-BAC.

Avantageusement, elle est choisie parmi le bis-(3-méthyl-4-aminocyclohexyl)-méthane ou 3,3'-diméthyl-4,4'-diamino-dicyclohexyl-méthane couramment dénommé (BMACM) ou (MACM) (et noté B ci-après), le bis(p-aminocyclohexyl)-méthane couramment dénommé (PACM) (et noté P ci-après) et la bis(aminométhyl)cyclohexane (BAC) , en particulier la 1,3-BAC ou la , en particulier la 1,4-BAC. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

La diamine aromatique peut être choisie parmi la 1,3-xylylène diamine et la 1,4-xylylène diamine.

Le diacide carboxylique peut être choisi parmi les diacides carboxyliques aliphatiques, linéaires ou ramifiés.

Lorsque l'acide dicarboxylique est aliphatique et linéaire, il peut être choisi parmi l'acide succinique (4), l'acide pentanedioïque (5), l'acide adipique (6), l'acide heptanedioïque (7), l'acide octanedioïque (8), l'acide azélaïque (9), l'acide sébacique (10), l'acide undécanedioïque (11), l'acide dodécanedioïque (12), l'acide brassylique (13), l'acide tétradécanedioïque (14), l'acide hexadécanedioïque (16), l'acide octadécanedioïque (18), l'acide octadécènedioïque (18), l'acide eicosanedioïque (20), l'acide docosanedioïque (22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque l'acide dicarboxylique est cycloaliphatique, il peut comporter les squelettes carbonés suivants : norbornyl méthane, cyclohexane, cyclohexylméthane, dicyclohexylméthane, dicyclohexylpropane, di(méthylcyclohexyl) ou di(méthylcyclo-hexyl)propane.

Lorsque l'acide dicarboxylique est aromatique, il est avantageusement choisi parmi l'acide téréphtalique (noté T), l'acide isophtalique (noté I) et l'acide 2,6 naphtalène dicarboxylique (noté N) ou leurs mélanges, en particulier il est choisi parmi l'acide téréphtalique (noté T), l'acide isophtalique (noté I) ou leurs mélanges.

Dans une quatrième variante, ledit polyamide est obtenu à partir d'un mélange d'au moins deux de ces trois variantes.

Avantageusement, ledit polyamide est un polyamide semi-cristallin.

Dans un premier mode de réalisation, ledit polyamide est choisi parmi un polyamide semi-cristallin aliphatique présentant un nombre moyen d'atome de carbone par atome d'azote de C4 à C15 et un polyamide semi-cristallin semi-aromatique (PPA).

Dans le cas d'un homopolyamide de type XY, avec X désignant un motif obtenu à partir d'une diamine et Y désignant un motif obtenu à partir d'un acide dicarboxylique, le nombre d'atomes de carbone par atome d'azote est la moyenne des nombres d'atomes de carbone présents dans le motif issu de la diamine X et dans le motif issu du diacide Y. Ainsi le PA6.12 est un PA à 9 atomes de carbone par atome d'azote, autrement dit un PA en C9. Le PA6.13 est en C9.5.

Dans le cas des copolyamides, le nombre d'atomes de carbone par atome d'azote se calcule selon le même principe. Le calcul est réalisé au prorata molaire des différents motifs amides.

Ledit polyamide semi-aromatique PPA, éventuellement modifié par des unités urées, notamment choisi parmi un PA MXD6, un PA MXD10 ou un polyamide semi-aromatique de formule X/YAr, tel que décrits dans EP1505099, notamment un polyamide semi-aromatique de formule A/ZT dans laquelle A est choisi parmi un motif obtenu à partir d'un aminoacide tel que défini ci-dessus, un motif obtenu à partir d'un lactame tel que défini ci-dessus et un motif répondant à la formule (diamine en Ca).(diacide en Cb), avec a représentant le nombre d'atomes de carbone de la diamine et la diamine en Ca étant tel que définie pour la diamine X ci-dessus et b représentant le nombre d'atome de carbone du diacide et le diacide en Cb étant tel que défini pour l'acide dicarboxylique Y ci-dessus;
ZT désigne un motif obtenu à partir de la polycondensation d'une diamine en Cx aliphatique ou cycloaliphatique telles que définies ci-dessus pour la diamine X et de l'acide téréphtalique.
A/ZT représente notamment un polyamide de formule A/6T, A/9T, A/10T ou A/11T, A étant tel que défini ci-dessus, en particulier un polyamide choisi parmi PA6/6T, PA66/6T, PA6I/6T, PA610/10T, PA612/10T, PA 1010/10T, PA1012/10T, PA1212/10T, PA610/12T, PA612/12T, PA1010/12T, PA 1012/12T, PA1212/12T, PA 11/6T/10T, PA11/10T, PA12/10T, PA11/12T, PA 12/12T, PA MPMDT/6T, PA MXDT/10T, PA MPMDT/10T, PA BACT/10T, PA BACT/6T, PA BACT/10T/6T ou un PA 11/BACT/10T,
en particulier un polyamide choisi parmi PA11/10T, PA12/10T, PA11/12T, PA 12/12T, PA610/10T, PA612/10T, PA1010/10T, PA1012/10T, PA1212/10T, PA610/12T, PA612/12T, PA1010/12T, PA 1012/12T et le PA1212/12T, en particulier le PA11/10T et le PA11/12T.
T correspond à l'acide téréphtalique, MXD correspond à la m-xylylène diamine, MPMD correspond à la méthylpentaméthylène diamine et BAC correspond au bis(aminométhyl)cyclohexane.

Dans une première variante de ce premier mode de réalisation, ledit polyamide semi-cristallin aliphatique présente un nombre moyen d'atome de carbone par atome d'azote de C4 à C9. Avantageusement, ledit polyamide semi-cristallin aliphatique est choisi parmi le PA6, PA66, PA410, le PA412, le PA610 et PA612, en particulier le PA610 et le PA612.

Ledit polyamide de cette première variante de ce premier mode de réalisation peut être utilisé dans la couche externe (II) de ladite structure tubulaire de l'invention qui est présente à l'intérieur du pack batterie dudit véhicule électrique.

Ledit polyamide de cette première variante de ce premier mode de réalisation peut aussi être utilisé dans la couche externe (II) de ladite structure tubulaire de l'invention qui est présente à l'intérieur et/ou à l'extérieur du pack batterie du système de stockage stationnaire de l'énergie.

Dans une seconde variante de ce premier mode de réalisation, ledit polyamide semi-cristallin aliphatique présente un nombre moyen d'atome de carbone par atome d'azote de C10 à C15. Avantageusement, ledit polyamide semi-cristallin aliphatique est choisi parmi le PA614, PA618, PA1010, PA1012, PA1014, PA1018, PA1210, PA1212, PA1214, PA1218, PA11, PA12, en particulier le PA11 et le PA12

Ledit polyamide de cette seconde variante de ce premier mode de réalisation peut être utilisé dans la couche externe (II) de ladite structure tubulaire de l'invention qui est présente à l'intérieur et/ou à l'extérieur du pack batterie dudit véhicule électrique.

Ledit polyamide de cette seconde variante de ce premier mode de réalisation peut aussi être utilisé dans la couche interne (II) de ladite structure tubulaire de l'invention qui est présente à l'intérieur et/ou à l'extérieur du pack batterie du système de stockage stationnaire de l'énergie.

Dans un deuxième mode de réalisation, ledit polyamide est un polyamide semi-cristallin semi-aromatique (PPA).

Avantageusement, ledit polyamide semi-cristallin semi-aromatique de ce deuxième mode de réalisation est choisi parmi PA6/6T, PA66/6T, PA6I/6T, PA610/10T, PA612/10T, PA 1010/10T, PA1012/10T, PA1212/10T, PA610/12T, PA612/12T, PA1010/12T, PA 1012/12T, PA1212/12T, PA 11/6T/10T, PA11/10T, PA11/12T, PA MPMDT/6T, PA MXDT/10T, PA MPMDT/10T, PA BACT/10T, PA BACT/6T, PA BACT/10T/6T ou un PA 11/BACT/10T.

Plus avantageusement, ledit polyamide semi-cristallin semi-aromatique de ce deuxième mode de réalisation est choisi parmi PA11/10T, PA12/10T, PA11/12T, PA 12/12T, PA610/10T, PA612/10T, PA1010/10T, PA1012/10T, PA1212/10T, PA610/12T, PA612/12T, PA1010/12T, PA 1012/12T et le PA1212/12T, en particulier le PA11/10T et le PA11/12T.

Ledit polyamide de ce deuxième mode de réalisation peut être utilisé dans la couche externe (II) de ladite structure tubulaire de l'invention qui est présente à l'intérieur et/ou à l'extérieur du pack batterie dudit véhicule électrique ou du pack batterie du système de stockage stationnaire de l'énergie.

### S'agissant du polymère thermoplastique P1 :

### La polyoléfine :

Selon un mode de réalisation, la couche (I) peut comprendre au moins une polyoléfine.

Dans un mode de réalisation, ladite polyoléfine de la couche interne (I) peut être une polyoléfine non fonctionnalisée choisie parmi un polyéthylène et un polypropylène. Il peut notamment s'agir d'un polyéthylène haute densité (« high density polyethylene » ou HDPE).

Selon un mode de réalisation, la couche interne (I) comprend, par rapport au poids total de la couche (I) au moins 20% en poids d'une polyoléfine, éventuellement de 0 à 80% en poids d'un élastomère, et éventuellement de 0 à 5% en poids d'un stabilisant thermique.

La polyoléfine peut être fonctionnalisée ou non fonctionnalisée ou un mélange de celle-ci.

Pour simplifier on a désigné la polyoléfine par (B) et on a décrit ci- dessous des polyoléfines fonctionnalisées (B1) et des polyoléfines non fonctionnalisées (B2).

Une polyoléfine non fonctionnalisée (B2) est classiquement un homo polymère ou copolymère d'alpha oléfines ou de dioléfines, telles que par exemple, éthylène, propylène, butène-1, octène-1, butadiène. A titre d'exemple, on peut citer :
- les homo polymères et copolymères du polyéthylène, en particulier LDPE, HDPE, LLDPE (linear low density polyéthylène, ou polyéthylène basse densité linéaire), VLDPE (very low density polyéthylène, ou polyéthylène très basse densité), PE-Raised Température (ou PE-RT) et le polyéthylène métallocène
- les homopolymères ou copolymères du propylène.
- les copolymères éthylène/alpha-oléfine tels qu'éthylène/propylène, les EPR (abréviation d'éthylène-propylene-rubber) et éthylène/propylène/diène (EPDM),
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle (EVA), la proportion de comonomère pouvant atteindre 40% en poids.

La polyoléfine fonctionnalisée (B1) peut être un polymère d'alpha oléfines ayant des motifs réactifs (les fonctionnalités) ; de tels motifs réactifs sont les fonctions acides, anhydrides, ou époxy. À titre d'exemple, on peut citer les polyoléfines précédentes (B2) greffées ou co- ou ter polymérisées par des époxydes insaturés tels que le (méth)acrylate de glycidyle, ou par des acides carboxyliques ou les sels ou esters correspondants tels que l'acide (méth)acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (B1) peut être choisie parmi les (co)polymères suivants, greffés avec anhydride maléique ou méthacrylate de glycidyle, dans lesquels le taux de greffage est par exemple de 0,01 à 5% en poids :
- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR (abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;
- des copolymères éthylène et acétate de vinyle (EVA) et (méth)acrylate d'alkyle, contenant jusqu'à 40% en poids de comonomères.

La polyoléfine fonctionnalisée (B1) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique ou époxy tel que (méth)acrylate de glycidyle.

A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :
- les copolymères éthylène/(méth)acrylate d'alkyle / acide (méth)acrylique ou anhydride maléique ou méthacrylate de glycidyle ;
- les copolymères éthylène/acétate de vinyle/anhydride maléique ou méthacrylate de glycidyle ;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth)acrylate d'alkyle" dans (B1) ou (B2) désigne les méthacrylates et les acrylates d'alkyle en C1 à C8, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Par ailleurs, les polyoléfines précitées (B1) peuvent aussi être réticulées par tout procédé ou agent approprié (diépoxy, diacide, peroxyde, etc.) ; le terme polyoléfine fonctionnalisée comprend aussi les mélanges des polyoléfines précitées avec un réactif difonctionnel tel que diacide, dianhydride, diépoxy, etc. susceptible de réagir avec celles-ci ou les mélanges d'au moins deux polyoléfines fonctionnalisées pouvant réagir entre elles.

Les copolymères mentionnés ci-dessus, (B1) et (B2), peuvent être copolymérisés de façon statistique ou séquencée et présenter une structure linéaire ou ramifiée.

Le poids moléculaire, l'indice MFI, la densité de ces polyoléfines peuvent aussi varier dans une large mesure, ce que l'homme de l'art appréciera. MFI, abréviation de Melt Flow Index, est l'indice de fluidité à l'état fondu. On le mesure selon la norme ASTM 1238.

Avantageusement les polyoléfines (B2) non fonctionnalisées sont choisies parmi les homopolymères ou copolymères du polypropylène et tout homo polymère de l'éthylène ou copolymère de l'éthylène et d'un comonomère de type alpha oléfinique supérieur tel que le butène, l'hexène, l'octène ou le 4-méthyl 1-Pentène. On peut citer par exemple les PP, les PE de haute densité, PE de moyenne densité, PE basse densité linéaire, PE basse densité, PE de très basse densité. Ces polyéthylènes sont connus par l'Homme de l'Art comme étant produits selon un procédé « radicalaire », selon une catalyse de type « Ziegler » ou, plus récemment, selon une catalyse dite « métallocène ».

Avantageusement les polyoléfines fonctionnalisées (B1) sont choisies parmi tout polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader^{®} (SK functional polymer) ou des polyoléfines greffées par de l'anhydride maléique comme les Orevac^{®} (SK functional polymer) ainsi que des ter polymères de l'éthylène, d'acrylate d'alkyle et d'acide (meth)acrylique. On peut citer aussi les homopolymères ou copolymères du polypropylène greffés par un anhydride d'acide carboxylique puis condensés avec des polyamides ou des oligomères mono aminés de polyamide.

Dans un mode de réalisation, la polyoléfine est réticulée.

Dans un autre mode de réalisation, la polyoléfine est un mélange mécanique d'un polymère thermoplastique oléfinique à matrice polyéthylène ou polypropylène et d'un élastomère, vulcanisé tel qu'un mélange PP/EPDM vulcanisé.

### L'élastomère thermoplastique :

Selon un mode de réalisation, la couche (I) peut comprendre au moins un élastomère thermoplastique. L'élastomère thermoplastique est un copolymère à blocs (copolymère bloc ether-amide : PEBA), copolymère bloc éther-ester, un thermolastique polyurethane : TPU, un thermoplastique élastomère styrénique)

Avantageusement, ledit polymère thermoplastique P1 de la couche interne (I) est choisi parmi les polyoléfines non fonctionnalisées, les polyoléfines fonctionnalisées et un mélange de celles-ci. Avantageusement, ledit au moins un polymère thermoplastique P1 de la couche interne (I) est une polyoléfine non fonctionnalisée et ladite structure tubulaire comprend alors une couche de liant (III) située entre ladite couche (I) et ladite couche (II).

Dans un mode de réalisation, ledit au moins un polymère thermoplastique P1 de la couche interne (I) est une polyoléfine non fonctionnalisée choisie parmi un polyéthylène et un polypropylène. Il peut notamment s'agir d'un polyéthylène haute densité (« high density polyethylene » ou HDPE).

Selon un mode de réalisation, la couche interne (I) comprend, par rapport au poids total de la couche (I) au moins 20% en poids d'une polyoléfine, éventuellement de 0 à 80% en poids d'un élastomère, et éventuellement de 0 à 5% en poids d'un stabilisant thermique.

La polyoléfine peut être telle que définie précédemment.

Concernant l'élastomère, il peut notamment s'agir d'un TPE (élastomère thermoplastique), c'est-à-dire un composé fabriqué à partir d'un matériau thermoplastique dur de type PP, PBT ou PA, associé à un matériau caoutchouteux mou.

A titre d'exemple d'élastomère thermoplastique convenant à l'invention, on peut notamment citer les oléfines thermoplastiques (TPE-O), les composés SBS, SEBS ou SEPS styrénique (TPE-S), les composé PP/EPDM vulcanisé (TPE-V), les composés de copolyester (TPE-E), les polyuréthanes thermoplastiques (TPE-U), et les polyamides thermoplastiques (TPE-A).

### S'agissant du liant

Le liant peut être une composition adhésive telle que décrite dans EP2098580, c'est-à-dire une composition adhésive comprenant :
- au moins un polyamide noté A présentant un nombre moyen d'atomes de carbone par atome d'azote noté CA compris entre 4 et 8,5, avantageusement entre 4 et 7 ;
- au moins un polyamide noté B présentant une température de fusion supérieure ou égale à 180°C et un nombre moyen d'atomes de carbone par atome d'azote noté CB compris entre 7 et 10, avantageusement entre 7,5 et 9,5 ;
- au moins un polyamide noté C présentant un nombre moyen d'atomes de carbone par atome d'azote noté CC compris entre 9 et 18, avantageusement entre 10 et 18 ;

au moins 50% en poids de ladite composition étant formés d'un ou de plusieurs polyamides choisis parmi les polyamides A, B et C,
la moyenne pondérée massique des enthalpies de fusion de ces polyamides au sein de ladite composition étant supérieure à 25J/g (DSC),
le nombre moyen d'atomes de carbone par atome d'azote des polyamides A, B et C répondant en outre à l'inéquation stricte suivante : CA < CB < CC.

Le liant peut aussi être par exemple, mais sans être limité à ceux-ci, une composition à base de 50% de copolyamide 6/12 (de ratio 70/30 en masse), et de 50% copolyamide 6/12 (de ratio 30/70 en masse), une composition à base de PP (polypropylène) greffé avec de l'anhydride maléique, connu sous le nom d'Admer QF551A de la société Mitsui, une composition à base de PA610 et de de PA6 et de stabilisants organiques, une composition à base de PA612 et de PA6 et de stabilisants organiques, une composition à base de PA610 (de Mn 30000, et tel que défini par ailleurs) et de PA12 et de stabilisants organiques, une composition à base PA6, de PA12 et d'EPR fonctionnalisé Exxelor VA1801 (société Exxon) et de stabilisants organiques ou encore une composition à base de PA610, de PA6 et de modifiant choc type éthylène/acrylate d'éthyle/anhydride en rapport massique 68,5/30/1,5 (MFI 6 à 190°C sous 2.16 kg), et de stabilisants organiques.

Le liant peut également être un copolymère de polyoléfine (tel que polyéthylène ou polypropylène) fonctionnalisée dont le comonomère fonctionnel est choisi parmi les groupes acide, anhydride ou époxyde.

Le groupe fonctionnel est choisi parmi les composés d'acides carboxyliques ou de leurs dérivés anhydride d'acides carboxyliques insaturés.

Des exemples d'anhydrides d'acide dicarboxylique insaturés sont notamment l'anhydride maléique, anhydride itaconique, anhydride citraconique, anhydride tetrahydrophtalique. De préférence, l'anhydride maléique est utilisé.

Toutefois, le comonomère fonctionnel peut comprendre une fonction du type époxyde insaturé.

Des exemples d'époxydes insaturés sont notamment: les esters et éthers de glycidyle aliphatiques tels que l'allylglycidylether, le vinylglycidylether, le maleate et l'itaconate de glycidyle, l'acrylate et le méthacrylate de glycidyle (GMA) et les esters et ethers de glycidyle alicycliques tels que le 2-cyclohexene-1-glycidylether, le cyclohexene-4, 5-dig lycidylcarboxylate, le cyclohexene-4-glycidyl carboxylate, le 5-norbornene-2-methyl-2-glycidyl carboxylate et l'endocis-bicyclo(2, 2, 1)-5-heptene-2, 3-diglycidyl dicarboxylate.

### S'agissant de l'ignifugeant

Il est présent de 15 à 38% dans la composition de la couche externe (II).

L'agent ignifugeant peut être un agent ignifugeant sans halogène, tels que décrit dans US 2008/0274355 et notamment un agent ignifugeant à base de phosphore.

L'ignifugeant est notamment un sel métallique choisi parmi un sel métallique de l'acide phosphinique, un sel métallique de l'acide diphosphinique, un polymère contenant au moins un sel métallique de l'acide phosphinique, un polymère contenant au moins un sel métallique de l'acide diphosphinique. L'ignifugeant peut aussi être un mélange des ignifugeants précités.

L'agent ignifugeant peut également être choisi parmi le sel métallique de l'acide phosphinique de formule (I) suivante et le sel métallique de l'acide diphosphinique de formule (II) suivante : 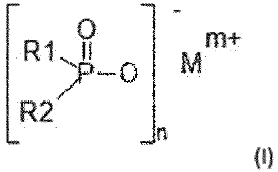 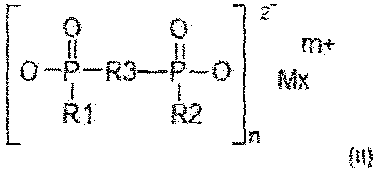 avec
R1 et R2, indépendamment l'un de l'autre, désignent un groupe alkyle en C1-C6 linéaire ou ramifié, ou un groupe aryle;
R3 représente un groupe alkylène en C1-C10 linéaire ou ramifié, arylène en C6-C10, alkylarylène en C6-C10, ou arylalkylène en C6-C10,
M est un ion Mg, Ca, Al, Sb, Sn, Ge, Ti, Zn, Fe, Zr, Ce, Bi, Sr, Mn, Li, Na, K et/ou une base amine protonée m désigne un entier de 1 à 4,
n désigne un entier de 1 à 4,
x désigne un entier de 1 à 4,
n et m étant choisis de manière à ce que le sel soit neutre, c'est-à-dire qu'il ne soit pas porteur d'une charge électrique.

De préférence, M représente un ion calcium, magnésium, aluminium ou zinc.

De préférence, R1 et R2, indépendamment l'un de l'autre, désignent un groupe méthyle, éthyle, n-propyle, iso-propyle, n-butyle, tertio-butyle, n-pentyle et/ou phényle.

De préférence, R3 représente un groupe méthylène, éthylène, n-propylène, iso-propylène, n-butylène, tertio-butylène, n-pentylène, n-octylène, n-dodécylène; phénylène, naphthylène; méthylphénylène, éthylphénylène, tertio-butylphénylène, méthylnaphthylène, éthylnaphthylène, tertio-butylnaphthylène; phénylméthylène, phényléthylène, phénylpropylène, or phénylbutylène. L'ignifugeant peut aussi être à base d'acide phosphonique tels que les phosphonates organiques qui sont des sels avec un cation organique ou inorganique ou les esters d'acide phosphonique. Les esters préférés d'acide phosphonique sont les diesters d'acides alkyl- ou phénylphosphoniques. Des exemples d'esters phosphoniques à utiliser comme retardateurs de flamme selon l'invention comprennent les phosphonates de formule générale (III) :

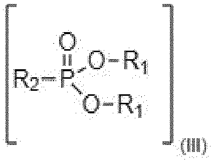

Dans laquelle :
R1 représente des groupements alkyle, cycloalkyle ou phényle éventuellement substitués, où les deux radicaux R1 peuvent également être liés l'un à l'autre dans un cycle, et
R2 est un radical alkyle, cycloalkyle ou phényle éventuellement substitué.

L'ignifugeant peut également être de la mélamine ou du cyanurate de mélamine.

L'ignifugeant peut aussi être un mélange d'agent ignifugeant à base de phosphinate d'aluminium et d'un agent synergiste d'ignifugation.

Les agents synergistes d'ignifugation sont notamment tels que décrits dans WO2005121234.

Ils peuvent être choisis parmi les synergistes azotés, les synergistes phosphore et les synergistes phosphore/azote.

Les synergistes azotés comprennent de préférence la benzoguanamine, le tris(hydroxyéthyl)isocyanurate, l'allantoïne, le glycolurile, la mélamine, le cyanurate de mélamine, le dicyandiamide, la guanidine, les carbodiimides.

Les synergistes azotés comprennent de préférence des produits de condensation de mélamine. A titre d'exemple, les produits de condensation de la mélamine sont le melem, le melam ou le melon, ou des composés de ce type avec un taux de condensation plus élevé, ou bien un mélange de ceux-ci, et, à titre d'exemple, peuvent être préparés par le procédé décrit aux États-Unis 5 985 960.

Les synergistes phosphore/azote peuvent comprendre des produits de réaction de mélamine avec de l'acide phosphorique ou avec des acides phosphoriques condensés, ou comprendre des produits de réaction de produits de condensation de mélamine avec de l'acide phosphorique ou des acides phosphoriques condensés, ou bien comprendre un mélange des produits spécifiés. et les synergistes d'ignifugation, notamment les synergistes azotés, en particulier à base de mélamine.

### S'agissant du composé choisi parmi un stabilisant thermique et un désactivateur métallique

Le stabilisant thermique peut être un stabilisant organique ou plus généralement une combinaison de stabilisants organiques, tel un antioxydant primaire de type phénol (par exemple du type de celle de l'irganox 245 ou 1098 ou 1010 de la société Ciba), un antioxydant secondaire de type phosphite et voire éventuellement d'autres stabilisants comme un HALS, ce qui signifie Hindered Amine Light Stabiliser ou stabilisant lumière de type amine encombrée (par exemple le Tinuvin 770 de la société Ciba), un anti-UV (par exemple le Tinuvin 312 de la société Ciba), un stabilisant phénolique ou à base de phosphore. On peut également utiliser des antioxydants de type amine tel le Naugard 445 de la société Crompton ou encore des stabilisants polyfonctionnels tel le Nylostab S-EED de la société Clariant.

Le stabilisant organique peut être choisi, sans que cette liste soit restrictive, parmi :
- les anti-oxydants phénoliques, par exemple l'Irganox 245, l'Irganox 1010, l'Irganox 1098 de la société Ciba, l'Irganox MD1024 de la société Ciba, le Lowinox 44B25 de la société Great Lakes,
- les stabilisants à base de phosphore, comme les phosphites, par exemple l'Irgafos 168 de la société Ciba,
- un absorbeur UV, tel le Tinuvin 312 de la société Ciba,
- un HALS, comme précédemment mentionné,
- un stabilisant de type amine, tel le Naugard 445 de la société Crompton, ou encore de type amine encombrée telle Tinuvin 770 de la société Ciba,
- un stabilisant polyfonctionnel tel le Nylostab S-EED de la société Clariant.

Ce stabilisant peut également être un stabilisant minéral, tel qu'un stabilisant à base de cuivre.

Le stabilisant à base de cuivre peut être choisi parmi le chlorure cuivreux, le chlorure cuivrique, le bromure cuivreux, le bromure cuivrique, l'iodure cuivreux, l'iodure cuivrique, l'acétate cuivreux et l'acétate cuivrique. On peut citer les halogénures, les acétates d'autres métaux tels l'argent en association avec le stabilisant à base de cuivre. Ces composés à base de cuivre sont typiquement associés à des halogénures de métaux alcalins. Un exemple bien connu est le mélange de Cul et KI, où le ratio Cul:Kl est typiquement compris entre 1:5 à 1:15. Un exemple d'un tel stabilisant est le Polyadd P201 de la société Ciba.

On trouvera de plus amples détails sur les stabilisants à base de cuivre dans le brevet US 2,705,227. Plus récemment, sont apparus des stabilisants à base de cuivre telles cuivres complexés comme les Bruggolen H3336, H3337, H3373 de la société Brueggemann.

Avantageusement, le stabilisant à base de cuivre est choisi parmi les halogénures de cuivre, l'acétate de cuivre, les halogénures de cuivre ou l'acétate de cuivre en mélange avec au moins un halogénure de métal alcalin, et leurs mélanges, de préférence les mélanges d'iodure de cuivre et d'iodure de potassium (Cul/KI).

Le désactivateur métallique utilisé est un désactivateur classique utilisé pour les polyoléfines; par exemple, les hydrazides peuvent être utilisés.

### S'agissant de la composition de la couche externe (II)

Ladite composition comprend en poids, par rapport au poids total de ladite composition:
a) au moins 50% d'au moins un polyamide,
b) de 15 à 38% d'au moins un ignifugeant,
c) de 4 à 20%, en particulier 4 à 15% d'une polyoléfine,
d) de 0 à 10%, en particulier de 0,1 à 10% en poids d'au moins un plastifiant,
e) de 0 à 5%, en particulier de 0,1 à 5% d'au moins un additif,
la somme a) + b) +c) + d) + e) étant égale à 100%.

Dans un mode de réalisation, ladite composition comprend en poids, par rapport au poids total de ladite composition :
a) au moins 50% d'au moins un polyamide,
b) de 15 à 38% d'au moins un ignifugeant,
c) de 4 à 15% d'une polyoléfine,
d) de 0 à 10%, en particulier de 0,1 à 10% en poids d'au moins un plastifiant,
e) de 0 à 5%, en particulier de 0,1 à 5% d'au moins un additif,
la somme a) + b) +c) + d) + e) étant égale à 100%.

Dans une première variante de ce mode de réalisation, ladite composition comprend en poids, par rapport au poids total de ladite composition:
a) au moins 50% d'au moins un polyamide,
b) de 15% à 38% d'au moins un ignifugeant,
c) de 4 à 15% d'une polyoléfine,
d) de 0,1 à 10% en poids d'au moins un plastifiant,
e) de 0 à 5%, en particulier de 0,1 à 5% d'au moins un additif,
la somme a) + b) +c) + d) + e) étant égale à 100%.

Dans une seconde variante, ladite composition comprend en poids, par rapport au poids total de ladite composition:
a) au moins 50% d'au moins un polyamide,
b) de 15% à 38% d'au moins un ignifugeant,
c) de 4 à 15% d'une polyoléfine,
d) de 0 à 10%, en particulier de 0,1 à 10% en poids d'au moins un plastifiant,
e) de 0,1 à 5% d'au moins un additif,
la somme a) + b) +c) + d) + e) étant égale à 100%.

Dans une troisième variante, ladite composition comprend en poids, par rapport au poids total de ladite composition:
a) au moins 50% d'au moins un polyamide,
b) de 15% à 38% d'au moins un ignifugeant,
c) de 4 à 15% d'une polyoléfine,
d) de 0,1 à 10% en poids d'au moins un plastifiant,
e) de 0,1 à 5% d'au moins un additif,
la somme a) + b) +c) + d) + e) étant égale à 100%.

L'invention concerne également les compositions constituées en poids des éléments a) + b) + c) + d) décrites dans ce mode de réalisation et ses trois variantes.

### S'agissant du plastifiant

Le plastifiant peut être présent jusqu'à 10% en poids, en particulier il est présent de 0,1 à 10% en poids par rapport au poids total de la composition.

Le plastifiant peut être un plastifiant couramment utilisé dans les compositions à base de polyamide(s). Avantageusement, on utilise un plastifiant qui présente une bonne stabilité thermique afin qu'il ne se forme pas de fumées lors des étapes de mélange des différents polymères et de transformation de la composition obtenue.

En particulier, ce plastifiant peut être choisi parmi :
les dérivés du benzène sulfonamide tels que le n-butyl benzène sulfonamide (BBSA), les isomères ortho et para de l'éthyl toluène sulfonamide (ETSA), le N-cyclohexyl toluène sulfonamide et le N-(2-hydroxypropyl) benzène sulfonamide (HP-BSA),
les esters d'acides hydroxybenzoïques tels que le para-hydroxybenzoate d'éthyl-2 hexyle (EHPB) et le para-hydroxybenzoate de décyl-2 hexyle (HDPB),
les esters ou éthers du tétrahydrofurfuryl alcool comme l'oligoéthylèneoxy-tétrahydrofurfurylalcool, et
les esters de l'acide citrique ou de l'acide hydroxymalonique, tels que l'oligoéthylèneoxymalonate. Un plastifiant préféré est le n-butyl benzène sulfonamide (BBSA).

Un autre plastifiant plus particulièrement préféré est le N-(2-hydroxy-propyl) benzène sulfonamide (HP-BSA). Ce dernier présente en effet l'avantage d'éviter la formation de dépôts au niveau de la vis et/ou de la filière d'extrusion ("larmes de filières"), lors d'une étape de transformation par extrusion. On peut bien évidemment utiliser un mélange de plastifiants.

### S'agissant de l'additif

L'additif peut être présent jusqu'à 5% en poids, en particulier il est présent de 0,1 à 5% en poids, par rapport au poids total de ladite composition.

Le au moins un additif peut être choisi parmi les stabilisants, les colorants, les adjuvants aidant à la transformation (processing aids), les agents tensioactifs, les agents nucléants, les pigments, les azurants, les antioxydants, les lubrifiants, les cires, ou un mélange de ceux-ci.

A titre d'exemple, le stabilisant peut être un stabilisant UV, un stabilisant organique ou plus généralement une combinaison de stabilisants organiques, tel un antioxydant de type phénol (par exemple du type de celle de l'irganox^{®} 245 ou 1098 ou 1010 de la société Ciba-BASF), un antioxydant de type phosphite (par exemple l'irgafos^{®} 126 ou Irgafos^{®} 168 de la société Ciba-BASF) et voire éventuellement d'autres stabilisants comme un HALS, ce qui signifie Hindered Amine Light Stabiliser ou stabilisant l'mière de type amine encombrée (par exemple le Tinuvin^{®} 770 de la société Ciba-BASF), un anti-UV (par exemple le Tinuvin^{®} 312 de la société Ciba), un stabilisant à base de phosphore. On peut également utiliser des antioxydants de type amine tel le Naugard^{®} 445 de la société Crompton ou encore des stabilisants polyfonctionnels tel le Nylostab^{®} S-EED de la société Clariant.

Ce stabilisant p'ut également être un stabilisant minéral, tel qu'un stabilisant à base de cuivre. A titre d'exemple de tels stabilisants minéraux, on peut citer les halogénures et les acétates de cuivre. Accessoirement, on peut considérer éventuellement d'autres métaux tel l'argent, mais ceux-ci sont connus pour être moins efficaces. Ces composés à base de cuivre sont typiquement associés à des halogénures de métaux alcalins, en particulier le potassium.

Dans un mode de réalisation, les additifs sont choisis parmi les antioxydants et les pigments colorés.

### S'agissant de la structure

Ladite structure comprend au moins deux couches, une couche interne (I) et une couche externe (II) telle que définie ci-dessus.

Dans un mode de réalisation, ladite structure est constituées des deux couches (I) et (II) définies ci-dessus.

Dans un autre mode de réalisation, suivant la formulation de la polyoléfine ou du mélange d'élastomère thermoplastique et de polyoléfine, une couche de liant telle que définie ci-dessus peut être nécessaire pour assurer l'adhésion entre les couches (I) et (II).

Ladite structure comprend alors les couches suivantes, de l'extérieur vers l'intérieur :
(II)//liant//(I).

Quelle que soit la structure, dans un mode de réalisation, l'épaisseur de la couche externe représente de 5 à 30% de l'épaisseur totale de ladite structure.

Dans un autre mode de réalisation, l'épaisseur de la couche interne représente au moins 70% de l'épaisseur totale, en particulier de 70 à 95% de l'épaisseur totale.

Dans encore un autre mode de réalisation, l'épaisseur de la couche externe représente de 5 à 30% de l'épaisseur totale de ladite structure et la couche interne représente au moins 70% de l'épaisseur totale, en particulier de 70 à 95% de l'épaisseur totale.

Avantageusement, ledit au moins un polymère thermoplastique P1 de la couche interne (I) est choisi parmi les polyoléfines non fonctionnalisées, les polyoléfines fonctionnalisées et un mélange de celles-ci.

Dans un mode de réalisation, ledit au moins un polymère thermoplastique P1 de la couche interne (I) est une polyoléfine non fonctionnalisée choisie parmi un polyéthylène et un polypropylène.

Dans un autre mode de réalisation, ledit au moins un polymère thermoplastique P1 de la couche interne (I) est une polyoléfine non fonctionnalisée qui est un polyéthylène.

Dans encore un autre mode de réalisation, ledit au moins un polymère thermoplastique P1 de la couche interne (I) est une polyoléfine non fonctionnalisée qui est un polypropylène.

Dans une première variante, que la structure comprenne deux ou trois couches, ladite structure comprend une couche (II) qui comprend une composition à base d'un polyamide semi-cristallin aliphatique présentant un nombre moyen d'atome de carbone par atome d'azote de C4 à C15.

Dans un mode de réalisation de cette première variante, la couche (I) de ladite structure est en polypropylène, en particulier stabilisé par un composé choisi parmi un stabilisant thermique et un désactivateur métallique ou un mélange de ceux-ci.

Dans une seconde variante, que la structure comprenne deux ou trois couches, ladite structure comprend une couche (II) qui comprend une composition à base d'un polyamide semi-cristallin aliphatique présentant un nombre moyen d'atome de carbone par atome d'azote de C4 à C9, la couche (I) de ladite structure est en polypropylène, en particulier stabilisé par un composé choisi parmi un stabilisant thermique et un désactivateur métallique ou un mélange de ceux-ci.

Avantageusement, dans cette seconde variante, ledit polyamide est choisi parmi PA6, PA66, PA410, le PA412, le PA610 et PA612, en particulier le PA610 et le PA612.

Dans cette seconde variante, ladite structure est présente à l'intérieur du pack batterie dudit véhicule électrique.

Dans cette seconde variante, ladite structure peut aussi être présente à l'intérieur et/ou à l'extérieur du pack batterie du système de stockage stationnaire de l'énergie.

Dans une troisième variante, que la structure comprenne deux ou trois couches, ladite structure comprend une couche (II) qui comprend une composition à base d'un polyamide semi-cristallin aliphatique présentant un nombre moyen d'atome de carbone par atome d'azote de C10 à C15, la couche (I) de ladite structure est en polypropylène, en particulier stabilisé par un composé choisi parmi un stabilisant thermique et un désactivateur métallique ou un mélange de ceux-ci. Avantageusement, dans cette troisième variante, ledit polyamide est choisi parmi le PA614, PA618, PA1010, PA1012, PA1014, PA1018, PA1210, PA1212, PA1214, PA1218, PA11, PA12, en particulier le PA11 et le PA12.

Dans cette troisième variante, ladite structure est présente à l'intérieur et/ou à l'extérieur du pack batterie dudit véhicule électrique.

Dans cette troisième variante, ladite structure peut aussi être présente à l'intérieur et/ou à l'extérieur du pack batterie du système de stockage stationnaire de l'énergie.

Avantageusement, dans tous les modes de réalisation de la structure et les différentes variantes, la polyoléfine de la couche interne et de la couche externe est identique.

Avantageusement, dans tous les modes de réalisation de la structure et les différentes variantes, la polyoléfine de la couche interne et de la couche externe est différente.

Selon un autre aspect, la présente invention concerne l'utilisation d'une structure tubulaire ignifugée telle que définie ci-dessus, pour le refroidissement de batterie de véhicule électrique ou de batterie de système de stockage stationnaire de l'énergie.

Tous les modes de réalisation décrits ci-dessus pour le polyamide, la polyoléfine, l'ignifugeant et la structure sont valables pour cette utilisation.

La présente invention va maintenant être illustrée par des exemples non limitatifs de la portée de l'invention.

### EXEMPLES

Les compositions du tableau 1 ont été préparées par mélange à l'état fondu des granulés de polyamide avec les ignifugeants, les polyoléfines, et éventuellement les plastifiants et les additifs. Les % indiqués sont des pourcentages en poids, par rapport au poids total de la composition. Ce mélange a été effectué par compoundage sur extrudeuse bi-vis co-rotative de diamètre 40 mm avec un profil de température (T°) plat à 250°C. La vitesse de vis est de 225 rpm et le débit de 55 kg/h.

Le ou les polyamide(s), les polyoléfines et éventuellement les plastifiants et les additifs sont introduits lors du procédé de compoundage en trémie principale. L'ignifugeant est ajouté dans le polymère fondu, en milieu de vis via un gaveur latéral. En cas de présence de plastifiant, celui-ci est aussi introduit dans le polymère fondu via une pompe.

Les compositions ont ensuite été extrudées sous forme de tube de 8*1 mm par coextrusion.

Les tubes MLT (Tube multicouche 8^{∗}1mm) ou monocouche (Tube 8^{∗}1mm monocouche) sont fabriqués sur une classique ligne d'extrusion tube multicouches comme décrit dans EP2098580 ou sur une classique ligne monocouche Maillefer 60 quand il s'agit de monocouches, afin d'étudier les propriétés mécaniques et la résistance au feu selon les normes ci-dessous.

Le profil de température utilisé pour les PA non ignifugés et ignifugés est le suivant (de la zone l'alimentation des granulés jusqu'à la fin de la vis : 210/220/220/220. La température (melt) en sortie de filière est de l'ordre de 220°C. Les polyoléfines sont extrudées avec le profil de température suivant : 160/210/220/220. La température du melt en sortie de filière est de l'ordre de 220°C. Le poinçon a un diamètre externe de 12mm et la filière un diamètre interne de 18mm. Les tubes sont obtenus avec des calibres dont le diamètre interne est compris entre 8.5mm et 9.2mm.

Les tubes monocouches et multicouches réalisés par extrusion ci-dessus ont ensuite été évalués sur plusieurs critères :
- flexibilité ;
- choc VW-40°C ;
- vieillissement mixte type refroidissement. Le tube rempli d'une solution d'eau glycolée (solution d'Havoline (50°/m) diluée dans de l'eau) et vieilli thermiquement dans une étuve à 110°C.

Les résultats et méthodes de mesures sont indiqués dans les Tableau 2 à 4 suivants.

Les structures de l'invention et comparatives ont été testées avec un test usuellement pratiqué de propagation de flamme nommé UL94 selon la norme (IEC 60695-11-10) sur la partie extérieure du tube.

Le test UL94, généralement appliqué sur un barreau d'un seul produit, est effectué ici sur une structure monocouche (tube monocouche) ou multi-couche, en particulier un tube tricouche avec la flamme qui est mise en contact uniquement avec la couche externe du tube, ledit tube tricouche présentant les dimensions de couche suivantes : de la couche externe vers la couche interne : 0.15mm // 0.10mm // 0.75mm ou 0.350mm // 0.10mm // 0.55mm.

**[Tableau 1]**

| Exemple de l'invention (El) ou comparatif (EC) | EC1 | EC2 | EC3 | EC4 | E1 | E2 |
|---|---|---|---|---|---|---|
| PA11 | 85% en poids | 75% en poids | - | 45% en poids | 57% en poids | - |
| PA610 | - | - | 85% en poids | - | - | 57% en poids |
| Polyoléfine Orevac IM 800 | 10% en poids | 10% en poids | 10% en poids | 10% en poids | 10% en poids | 10% en poids |
| Exolit^{®} OP1311 | - | 10% en poids | - | 40% en poids | 28% en poids | 28% en poids |
| BBSA | 5% en poids | 5% en poids | 5% en poids | 5% en poids | 5% en poids | 5% en poids |

**[Tableau 2]**

| | MonoCouche EC1 | MonoCouche EC2 | MonoCouche EC3 | MonoCouche EC4 | MonoCouche E1 | MonoCouche E2 | MonoCouche HDPE* |
|---|---|---|---|---|---|---|---|
| vieillissement thermique eau glycolée/air (5) | A | B | A | C | C | C | A |
| Choc à -40°C (3) | 0% | 30% | 0% | 100% | 100% | 100% | 0% |
| Flexibilité (2) | 460 | 540 | 490 | 950 | 625 | 657 | 550 |
| Classement | NC | V2 | NC | V0 | V-0 | V-0 | NC |
| UL 94 (5) | | | | | | | |

| | | | | | | | |
|---|---|---|---|---|---|---|---|
| NC= non classé plus mauvais que V2 | | | | | | | |

**[Tableau 3]**

| | Tricouche 15% en poidsE1//10% en poidsLiant LDPE greffé anhydride maléique//75% en poids HDPE* Conforme à l'invention | Tricouche 15% en poids E2//10% en poids Liant LDPE greffé anhydride maléique//75% en poids HDPE* Conforme à l'invention | Bicouche 15% en poids E1//85% en poids HDPE g-MAH** Conforme à l'invention | Tricouche 15% en poids EC1//10% en poids Liant LDPE greffé anhydride maléique//75% en poids HDPE* Comparatif | Tricouche 15% en poids EC3//10% en poids Liant LDPE greffé anhydride maléique//75% en poids HDPE* Comparatif |
|---|---|---|---|---|---|
| vieillissement thermique eau glycolée/air (4) | A | A | A | A | A |
| Choc à -40°C (3) | 0% | 0% | 0% | 0% | 0% |
| Flexibilité (2) | 567 | 570 | 558 | 536 | 545 |
| Classement | V-0 | V-0 | V-0 | NC | NC |
| UL 94 (5) | | | | | |

**[Tableau 4]**

| | Tricouche 15%EC4//10%Liant LDPE greffé anhydride maléique//75%HDP E* Comparatif | Tricouche 15% EC2 // 10% liant LDPE greffé anhydride maléique // 75% HDPE Comparatif | Tricouche 35% EC2 // 10% liant LDPE greffé anhydride maléique // 55% HDPE Comparatif |
|---|---|---|---|
| vieillissement thermique eau glycolée/air (4) | A | A | A |
| Choc à -40°C (3) | 100% | 0% | 5% |
| Flexibilité (2) | 617 | 547 | 552 |
| Classement | V-0 | NC | NC |
| UL 94 (5) | | | |

| | | | |
|---|---|---|---|
| (1) Tube 8^{∗}1mm monocouche et multicouche 8^{∗}1mm, les couches des tricouches sont répartis ainsi de la couche externe vers la couche interne : 0.15mm // 0.10mm // 0.75mm et 0.35mm// 0.10mm// 0.55mm. Le tube bicouche est réparti de la couche externe vers la couche interne : 0.15mm//0.85mm. (2) Module de flexion selon ISO178 :2010 déterminé à 23°C avec une humidité relative : RH50%, exprimée en MPa. (3) Choc à -40°C selon la norme VW TL-52435 §6.5, PV 3905, en % de casse. (4) Tenue au vieillissement à 110°C dans l'air, demi-vie en h (correspond au point où on obtient une diminution de 50% de l'allongement, selon ISO 527-1A. Le vieillissement est suffisamment représentatif de l'application vieillissement dans air (extérieur du tube) / fluide (intérieur du tube) A = demi-vie > 1500h; B = demi-vie > 500h et < 1500h ; C = demi-vie < 500h (5) Evaluation UL 94 selon IEC 60695-11-10 Orevac^{®} IM 800 : HDPE modifié anhydride maléique (SK Functional Polymer) Liant LDPE greffé anhydride maléique : Admer GT7 (Mitsui) HDPE* : Lupolen GX5038 LyondellBasell HDPE g-MAH** : mélange de 93% en poids de Lupolen GX5038 LyondellBasell et de 7% en poids d' Orevac OE25 SK Functional Polymers en dryblend. L'ajout d'Orevac OE25 LLDPE fortement greffé en anhydride maléique permet d'avoir un HDPE g-MAH pour adhérer à une couche de polyamide. | | | |

## Revendications

1. Structure tubulaire multicouche ignifugée pour le refroidissement de batterie de véhicule électrique ou de batterie de système de stockage stationnaire de l'énergie, comprenant au moins deux couches :
une couche interne (I) comprenant au moins 40% d'au moins un polymère thermoplastique P1 choisi parmi une polyoléfine et un élastomère thermoplastique et jusqu'à 5% en poids d'un composé choisi parmi un stabilisant thermique et un désactivateur métallique ou un mélange de ceux-ci, une composition à base d'une polyoléfine, ladite composition comprenant en poids :
une couche externe (II) comprenant une composition à base d'au moins un polyamide majoritaire, ladite composition comprenant en poids, par rapport au poids total de la couche (II) :
a) au moins 50% en poids d'au moins un polyamide,
b) de 15 à 38% en poids d'au moins un ignifugeant,
c) de 4 à 20% en poids, en particulier 4 à 15% en poids d'une polyoléfine,
d) de 0 à 10% en poids, en particulier de 0,1 à 10% en poids d'au moins un plastifiant,
e) de 0 à 5% en poids, en particulier de 0,1 à 5% en poids d'au moins un additif,la somme a) + b) +c) + d) + e) étant égale à 100%.

2. Structure tubulaire multicouche ignifugée selon la revendication 1, **caractérisée en ce que** le polyamide est choisi parmi un polyamide semi-cristallin aliphatique présentant un nombre moyen d'atome de carbone par atome d'azote de 4 à 15 et un polyamide semi-cristallin semi-aromatique (PPA).

3. Structure tubulaire multicouche ignifugée selon la revendication 2, **caractérisée en ce que** le polyamide semi-cristallin aliphatique présente un nombre moyen d'atome de carbone par atome d'azote de 4 à 9.

4. Structure tubulaire multicouche ignifugée selon la revendication 3, **caractérisée en ce que** le polyamide semi-cristallin aliphatique est choisi parmi le PA6, PA66, PA410, le PA412, le PA610 et PA612, en particulier le PA610 et le PA612.

5. Structure tubulaire multicouche ignifugée selon l'une des revendications 3 ou 4, **caractérisée en ce qu'**elle est présente à l'intérieur du pack batterie dudit véhicule électrique.

6. Structure tubulaire multicouche ignifugée selon la revendication 2, **caractérisée en ce que** le polyamide semi-cristallin aliphatique présente un nombre moyen d'atome de carbone par atome d'azote de 10 à 15.

7. Structure tubulaire multicouche ignifugée selon la revendication 6, **caractérisée en ce que** le polyamide semi-cristallin aliphatique est choisi parmi le PA614, PA618, PA1010, PA1012, PA1014, PA1018, PA1210, PA.1212, PA1214, PA1218, PA11, PA12, en particulier le PA11 et le PA12

8. Structure tubulaire multicouche ignifugée selon l'une des revendications 6 ou 7, **caractérisée en ce qu'**elle est présente à l'intérieur et/ou à l'extérieur du pack batterie dudit véhicule électrique.

9. Structure tubulaire multicouche ignifugée selon l'une des revendications 3-4 et 6-7, **caractérisée en ce qu'**elle est présente à l'intérieur et/ou à l'extérieur du pack batterie du système de stockage stationnaire de l'énergie.

10. Structure tubulaire multicouche ignifugée selon la revendication 2, **caractérisée en ce que** le polyamide est un polyamide semi-cristallin semi-aromatique (PPA).

11. Structure tubulaire multicouche ignifugée selon la revendication 10, **caractérisée en ce que** le polyamide semi-cristallin semi-aromatique est choisi parmi PA11/10T, PA12/10T, PA11/12T, PA 12/12T, PA610/10T, PA612/10T, PA1010/10T, PA1012/10T, PA1212/10T, PA610/12T, PA612/12T, PA1010/12T, PA 1012/12T et le PA1212/12T, en particulier PA11/10T et PA11/12T.

12. Structure tubulaire multicouche ignifugée selon la revendication 10 ou 11, **caractérisée en ce qu'**elle est présente à l'intérieur et/ou à l'extérieur du pack batterie dudit véhicule électrique ou du pack batterie du système de stockage stationnaire de l'énergie.

13. Structure tubulaire multicouche ignifugée selon l'une revendications 1 à 12, **caractérisée en ce que** ladite polyoléfine P1 de la couche interne (I) est choisie parmi les polyoléfines non fonctionnalisées, les polyoléfines fonctionnalisées et un mélange de celles-ci.

14. Structure tubulaire multicouche ignifugée selon la revendication 13, **caractérisée en ce que** ladite polyoléfine P1 de la couche interne (I) est une polyoléfine non fonctionnalisée et ladite structure tubulaire comprend une couche de liant (III) située entre ladite couche (I) et ladite couche (II).

15. Structure tubulaire multicouche ignifugée selon l'une revendications 1 à 14, **caractérisée en ce que** ladite polyoléfine P1 de la couche interne (I) est une polyoléfine non fonctionnalisée choisie parmi un polyéthylène et un polypropylène.

16. Structure tubulaire multicouche ignifugée selon l'une revendications 1 à 15, **caractérisée en ce que** la couche externe (II) présente une épaisseur comprise de 5 à 30% de l'épaisseur totale de ladite structure.

17. Structure tubulaire multicouche ignifugée selon l'une revendications 1 à 16, **caractérisée en ce que** la couche interne (I) présente une épaisseur d'au moins 70% de l'épaisseur totale de ladite structure.

18. Structure tubulaire multicouche ignifugée selon l'une revendications 14 ou 15, **caractérisée en ce que** la couche externe (II) présente une épaisseur comprise de 5 à 30% de l'épaisseur totale de ladite structure et la couche interne (I) présente une épaisseur d'au moins 70% de l'épaisseur totale de ladite structure.

19. Utilisation d'une structure tubulaire ignifugée telle que définie dans l'une des revendications 1 à 18, pour le refroidissement de batterie de véhicule électrique ou de batterie de système de stockage stationnaire de l'énergie.
